# EUROPÄISCHE PATENTANMELDUNG

(11) **EP 2 505 936 A1**
(43) Veröffentlichungstag der Anmeldung: **03.10.2012**
(21) Anmeldenummer: 12000412.2
(22) Anmeldetag: 24.01.2012
(51) Int. Cl.: F24J 2/52, F24J 2/46

(54) **Befestigungsvorrichtung für ein Trägerprofil**

(30) Priorität: 26.01.2011 DE 202011001943 U
(71) Anmelder: Sodeik, Clemens, 79541 Lörrach (DE); Sodeik, Matthias, 79400 Kandern (DE)
(72) Erfinder: Sodeik, Clemens, 79541 Lörrach (DE); Sodeik, Matthias, 79400 Kandern (DE)
(74) Vertreter: Ebert, Jutta

(57) **Zusammenfassung**

Eine Befestigungsvorrichtung für die Befestigung eines Trägerprofils an einer Dachunterkonstruktion besteht aus einer mit Befestigungslöchern (3) versehenen und die Form eines Rechtecks aufweisenden Befestigungsplatte (2) und einem mit der Befestigungsplatte (2) unmittelbar verbundenen Tragabschnitt (1). An dem Tragabschnitt (1), der etwa senkrecht von der Befestigungsplatte (2) abragt, ist ein Verbindungselement (5) für ein Trägerprofil (6, 6') angebracht und die Befestigungsplatte (2) ist mit Hilfe der Befestigungslöcher (3) mit der Dachunterkonstruktion verbindbar. Um das Eindringen von Feuchtigkeit oder Nässe in die Dachunterkonstruktion zu vermeiden, ist die Befestigungsplatte (2) mit einem Dichtungslappen (19) unterlegt, der allseits unter der Befestigungsplatte (2) hervorragt; die seitlich unter der Befestigungsplatte (2) hervorragenden Streifen (20) des Dichtungslappens (19) sind umgefalzt und können so Nässe ableiten. In Längsrichtung ragt der Dichtungslappen (19) über die nächste Dachziegelreihe (12, 12') und kann von der oberen Dachziegelreihe (12) aus gesehen auf die Befestigungsplatte (2) zurückgefaltet sein (Fig. 4).

## Beschreibung

Die Erfindung bezieht sich auf eine Befestigungsvorrichtung für die Befestigung eines Trägerprofils an einer Dachunterkonstruktion mit einer mit Befestigungslöchern versehenen und die Form eines Rechtecks aufweisenden Befestigungsplatte und mit einem mit der Befestigungsplatte unmittelbar verbundenen Tragabschnitt, an dem ein Verbindungselement für ein Trägerprofil angebracht ist und der etwa senkrecht von der Befestigungsplatte abragt, wobei die Befestigungsplatte mit Hilfe der Befestigungslöcher mit der Dachunterkonstruktion verbindbar ist.

Durch die DE 10 2006 000090 A1 ist eine Befestigungsvorrichtung für ein Trägerprofil bekannt, die geeignet ist für die beabstandete Befestigung von Trägerprofilen an einer Dachunterkonstruktion, wie sie besonders in entsprechender Stückzahl bei der Montage von Solarmodulen oder ähnlichen Komponenten, z.B. Solarkollektoren, auf Dächern eingesetzt werden. Die Befestigungsvorrichtung umfasst einen sogenannten Dachhaken, der eine Befestigungsplatte zur Befestigung des Dachhakens an einer Dachunterkonstruktion und einen parallel aber versetzt zur Befestigungsplatte verlaufenden Festlegeabschnitt mit einem Befestigungselement für das Trägerprofil aufweist. Damit ein Dachhaken zwischen zwei Dachziegeln der Dacheindeckung hindurchgeführt werden kann, so dass der Festlegeabschnitt schließlich in etwa parallel, über und im Abstand zu einem Dachziegel verläuft, sind Befestigungsplatte und Festlegeabschnitt durch ein mehrfach gebogenes Verbindungsteil mit einander verbunden, und zwar ragt von der Befestigungsplatte ein erster Abschnitt des Verbindungsteils in etwa rechtwinklig ab, der so hoch ist, dass er einen auf der Dachunterkonstruktion aufgebrachten Dachziegel gerade überragt. Ein zweiter, längerer Abschnitt ist in etwa rechtwinklig vom ersten Abschnitt und von der Befestigungsplatte weg gerichtet abgebogen und kommt nach der Montage auf einem Dachziegel einer ersten Reihe von Dachziegeln nahezu oder bei Belastung tatsächlich zur Auflage. Von dem zweiten Abschnitt ist ein dritter Abschnitt in etwa rechtwinklig und entgegengesetzt zum ersten Abschnitt gerichtet abgebogen; er überragt in seiner Höhe den Dachziegel einer zweiten Reihe von Dachziegeln und ist an seinem Ende mit dem Festlegeabschnitt für das Trägerprofil so verbunden, dass der Festlegeabschnitt den Dachziegel der zweiten Reihe beabstandet übergreift. Auf dem Festlegeabschnitt ist ein Befestigungselement für das Trägerprofil eines Solarmoduls oder ähnlicher Komponenten angeordnet.

Es hat sich gezeigt, dass durch den nach der Montage auf einem Dachziegel nahezu aufliegenden zweiten Abschnitt des Verbindungsteils Schäden an den Dachziegeln entstehen können, insbesondere bei Belastung der Anordnung beispielsweise durch Sturm oder Schnee. Das gebogene Verbindungsteil kann in Schwingung geraten, und verstärkt durch die dabei auftretende Hebelwirkung können die vom Verbindungsteil auf einen Dachziegel übertragenen Kräfte diesen springen oder brechen lassen, so dass Wasser und Feuchtigkeit durch das Dach dringen können. Dies wirkt sich deshalb besonders nachteilig aus, weil der Schaden in der Regel erst entdeckt wird, wenn Feuchtigkeit oder Nässe bereits durch das Dach in die darunter liegenden Räume eines Gebäudes dringt, denn die Ziegel sind nach der Montage von Solarmodulen oder ähnlicher Komponenten von diesen abgedeckt und von außen nicht mehr einsehbar. Um solche Schäden rechtzeitig zu entdecken und beheben zu können, müssten regelmäßige und aufwendige Kontrollarbeiten durchgeführt werden, um den Zustand der unter den Solarmodulen oder ähnlicher Komponenten befindlichen Dachziegel feststellen und gegebenenfalls Reparaturarbeiten ausführen zu können.

Es ist auch ein Dachhaken als Befestigungsvorrichtung von im Prinzip gleicher Bauweise, wie oben beschrieben, bekannt, bei dem die direkte Auflage des zweiten Abschnittes des Verbindungsteils zunächst vermieden wird, indem dieser zweite Abschnitt nicht parallel zur Befestigungsplatte und zum Dachziegel verläuft, sondern vom ersten Abschnitt statt im rechten Winkel in einem stumpfen Winkel abgebogen ist, er also leicht nach oben weist. Die direkte Auflage auf dem Dachziegel kann damit zunächst zwar vermieden werden, Schwingungen, die bei Belastung, z.B. durch Sturm und Schnee auftreten, werden aber nicht immer vermieden, so dass der zweite Abschnitt des Verbindungsteils doch wieder in Kontakt mit dem darunter liegenden Dachziegel kommt und dieser in gleicher Weise, wie oben beschrieben, beschädigt wird.

Durch die EP 1 569 279 A2 ist ein Dachhaken bekannt, bei dem eine Befestigungsplatte durch ein ebenfalls aus drei, in gleicher Weise wie oben beschrieben, abgebogenen Abschnitten bestehendes Verbindungsteil mit einem senkrecht zur Befestigungsplatte, also in Verlängerung des dritten Abschnitts des Verbindungsteils abragenden Tragabschnitt für ein Trägerprofil verbunden ist. Der Tragabschnitt besteht aus einem Gewindebolzen, an dem zwischen Muttern das Trägerprofil höhenverstellbar gehalten werden kann. Bei einem anderen, sehr ähnlichen Dachhaken ist der dritte, senkrecht stehende Abschnitt zum Tragabschnitt verlängert, und die Verstellbarkeit wird durch ein Langloch im senkrecht stehenden Tragabschnitt hergestellt.

Auch bei diesen Dachhaken kommt der zweite Abschnitt des Verbindungsteils nach der Montage auf einem Dachziegel nahezu und bei Belastung tatsächlich zur Auflage, und es können dieselben Schäden aus denselben Ursachen entstehen, wie oben beschrieben.

Durch die WO 2009/129799 A1 ist ein Dachbefestigungssystem mit einem Dachhaken bekannt, bei dem ein senkrecht von einer mit einem Dachsparren verbundenen Befestigungsplatte abragender Tragabschnitt für ein Trägerprofil durch eine in einem Dachziegel vorgesehene Aussparung ragt; außerdem soll im Bereich zwischen der Aussparung im Dachziegel und dem Tragabschnitt des Dachhakens ein zumindest teilweise fluider Zwischenraum bestehen, um eine Krafteinleitung in den Dachziegel zu vermeiden, wenn der Tragabschnitt auf Grund einer äußeren Belastung verformt wird. Mit "fluid" ist gemeint, dass der Zwischenraum zwischen dem Tragabschnitt des Dachhakens und dem Dachziegel im Bereich der Aussparung z.B. mit Luft oder auch mit einer Schaumstoffeinlage oder dergleichen gefüllt ist. Damit kann ein direkter Kontakt zwischen Tragabschnitt und Dachziegel bei Verformung des Tragabschnitts tatsächlich vermieden werden. Allerdings mussten Vorkehrungen getroffen werden, um das Eindringen von Feuchtigkeit oder Nässe im Bereich der Aussparung am Dachziegel zu vermeiden. Zu diesem Zweck wird vorgeschlagen, eine Tülle aus Gummi oder einem anderen elastischen Material, wie Kunststoff, vorzusehen, die den Tragabschnitt dicht umschließt und gegen den Dachziegel abdichtet. Die Tülle kann an eine Platte aus Metall, z.B. Blei, oder einem elastischen Material, wie Gummi oder Kunststoff, angespritzt sein. Nach dem Überstülpen der Tülle über den Tragabschnitt des Dachhakens wird die Platte an die Konturen des betreffenden Dachziegels angedrückt und angeformt. Neben der recht umständlichen Montagearbeit ist die Verwendung von Gummi oder Kunststoff für die Abdichtung von Nachteil, da diese Stoffe verhältnismäßig bald porös und bröselig werden, zumal sie sich außen auf dem Dachziegel befinden und damit Wind und Wetter ausgesetzt sind. Sie verlieren dann ihre gegen Feuchtigkeit und Nässe abdichtende Eigenschaft und behalten sie bestimmt nicht über die heutzutage erwartete Lebensdauer einer auf einem Dach installierten Solaranlage von 20 Jahren, so dass auch in diesem Fall in verhältnismäßig kurzen Zeitabständen umfangreiche Kontroll- und Wartungsarbeiten durchzuführen sind, zumal diese Anlagen einschließlich der verwendeten Gummi-oder Kunststoffteile starken Belastungen durch Krafteinwirkungen von außen und Temperaturschwankungen ausgesetzt sind.

Weitere Nachteile ergeben sich aus der vorgeschlagenen Form des Dachhakens selbst. Der Tragabschnitt ist etwa L-förmig ausgebildet, wobei der Querbalken einen Fußteil des Tragabschnitts bildet, mit dem er in der Mitte der rechteckigen Befestigungsplatte und entlang ihrer Längsachse befestigt ist. Beidseitig des Fußteils des Tragabschnitts sind in der Befestigungsplatte Befestigungslöcher vorgesehen, über die der Dachhaken mit einem Dachsparren mittels Schrauben verbunden werden kann. Durch diese Form des Dachhakens und besonders durch die Ausrichtung des Tragabschnitts an der Befestigungsplatte ist man sehr unflexibel bei der Positionierung des Dachhakens. Die Längsachse der Befestigungsplatte und der Fußteil des Tragabschnitts müssen immer parallel zur Längsachse des Dachsparrens verlaufen und über dem Dachsparren angeordnet sein. Es gibt keinerlei Spielraum quer zum Dachsparren. Weil es unterschiedliche Dachziegeltypen gibt und weil die Position dieses Dachhakens quer zum Dachsparren genau festliegt, kann die oben erwähnte Aussparung am Dachziegel für den hindurchragenden Tragabschnitt nicht vorgefertigt werden, sondern muss erst beim Eindecken des Daches jedes Mal, wenn der Dachdecker bei seiner eigentlichen Arbeit an einem Dachhaken anlangt, in Anpassung an den Dachziegel vorgenommen werden. Die Aussparung kann dabei immer wieder an ganz unterschiedlichen Stellen des Dachziegels erforderlich sein, etwa am rechten oder am linken Rand oder in der Mitte oder zwischen der Mitte und dem rechten oder linken Rand des Dachziegels. Der Dachdecker muss an immer wieder unterschiedlichen Stellen der Dachziegel die Aussparung herausschneiden, dies ist umständlich, erschwert die Arbeit des Dachdeckers und erzeugt Staub, der sich in der Umgebung verteilt.

Es ist weiter ein Dachhaken bekannt, bei dem an einer Befestigungsplatte mit Befestigungslöchern ein kreisrunder Dorn als Tragabschnitt befestigt ist, der durch eine kreisrunde Aussparung in einem Dachziegel ragen soll. Dabei werden vorgelochte Dachziegel verwendet. Um die Dachhaken in Bezug auf die vorgelochten Dachziegel auf dem Dachsparren richtig positionieren zu können, wird vorgeschlagen, in dem Bereich, in dem eine Dachhaken angebracht werden soll, Dachsparren mit einem oder mehreren quer verlaufenden Grundträgern unter Zuhilfenahme von Schablonen zu verbinden. Die Dachhaken werden dann an dem Grundträger befestigt. Um einen Dachhaken dabei richtig zu positionieren, wird ein vorgelochter Dachziegel zunächst an der Stelle angelegt, wo er neben einem Nachbarziegel liegen soll, die runde Aussparung wird markiert und der Dachhaken mittels einer weiteren Schablone an der richtigen Stelle des Grundträgers befestigt. Danach kann der vorgelochte Dachziegel eingehängt werden. Damit keine Kräfte vom Tragabschnitt bzw. Dom auf den Dachziegel übertragen werden und Schäden am Dachziegel vermieden werden können, muss zwischen dem Umfang des Tragabschnitts bzw. Doms und dem Rand der kreisrunden Aussparung ein Zwischenraum bestehen bleiben. Schon ein punktueller Kontakt kann sich nachteilig auswirken. Gegen das Eindringen von Feuchtigkeit und Nässe wird der Tragabschnitt oder Dom mit einer flexiblen Dichtmanschette umlegt, die mit einer selbstklebenden Klebeschicht versehen ist und fest auf den Dachziegel aufgedrückt wird. Der Kragen der Dichtmanschette muss noch mit einem Clip am Tragabschnitt bzw. Dom gesichert werden. Die Montagearbeiten sind sehr umfangreich und umständlich besonders durch die mehrfach notwendige Ausrichtung von Bauteilen. Das Material der auf dem Dachziegel liegenden, flexiblen Dichtmanschette selbst und auch der auf ihr aufgebrachten Klebeschicht hat nicht die Lebensdauer, die von einer auf einem Dach installierten Solaranlage heutzutage erwartet wird, so dass auch hier wiederholte und umfangreiche Kontroll- und Wartungsarbeiten notwendig sind um das Eindringen von Feuchtigkeit und Nässe in das Dach und die darunter liegenden Räume eines Gebäudes sicher zu vermeiden. Auch wird die Klebeeigenschaft der auf der Dichtmanschette aufgebrachten Klebeschicht schon bei der Montage durch auf Baustellen auftretenden Staub, Schmutz und Nässe beeinträchtigt, so dass eine zuverlässige Dichtwirkung nicht garantiert werden kann.

Aufgabe der Erfindung ist es, eine Befestigungsvorrichtung für ein Trägerprofil an einer Dachunterkonstruktion zu schaffen, durch die die auf der Dachunterkonstruktion liegenden Dachziegel nicht belastet werden, sondern auftretende Kräfte direkt in die Dachunterkonstruktion, die Dachsparren bzw. Dachpfetten abgeleitet werden, somit Schäden an Dachziegeln und demzufolge durch beschädigte Dachziegel eindringende Feuchtigkeit oder Nässe in den Dachstuhl und darunter liegende Räume zuverlässig und dauerhaft vermieden werden. Die Vorrichtung soll eine sichere und über eine angenommene Lebensdauer einer auf einem Dach installierten Solaranlage weitgehend wartungsfreie Abdichtung gegen eindringende Feuchtigkeit und Nässe aufweisen. Auch soll die Vorrichtung insgesamt im Vergleich zum Stand der Technik stabiler, sicherer und belastbarer sein, so dass eine lange Lebensdauer bei nur geringen Wartungsarbeiten gewährleistet ist. Die Vorrichtung soll auch einfach zu montieren sein.

Erfindungsgemäß wird dies durch eine Befestigungsvorrichtung gemäß Anspruch 1 erreicht.

Die Befestigungsplatte ist mit ihrer Längsachse quer zur Dachneigung mit der Dachunterkonstruktion verbunden und zur Abdichtung gegen eindringende Feuchtigkeit und Nässe mit einem Dichtungslappen unterlegt. Indem die Abdichtung zwischen Dachunterkonstruktion und Befestigungsplatte vorgenommen wird, ist sie keinen äußeren Einwirkungen, wie Wind und Wetter, ausgesetzt sondern von der Dacheindeckung weitgehend geschützt. Ihre Lebensdauer verlängert sich deutlich.

Die Breite des Dichtungslappens ist bevorzugt so bemessen, dass dieser an beiden Schmalseiten der Befestigungsplatte unter ihr streifenförmig hervorragt und die sich bildenden Streifen sind beidseitig in Richtung Befestigungsplatte umgefalzt. Diese umgefalzten Streifen können Regen- oder Tauwasser zuverlässig, wie gewünscht, in Traufrichtung ableiten. Vorteilhaft ist dabei die Breite des verwendeten Dichtlappens nicht abhängig von einem bestimmten Ziegeltyp, sie ergibt sich nur aus der Breite der Befestigungsplatte und ist in der Regel gleichartig für verschiedene Dachziegelarten.

Vorteilhaft ist die Länge des Dichtungslappens so bemessen, dass er auf der der nächst unteren Reihe von Dachziegeln einer Dacheindeckung zugewandten Längsseite der Befestigungsplatte unter dieser Befestigungsplatte hervorragt und bis über einen Dachziegel der nächst unteren Reihe der Dacheindeckung ragt, diesen so zumindest teilweise abdeckt. Ein auf der anderen Längenseite der Befestigungsplatte unter ihr hervorragender Abschnitt des Dichtungslappens ist zum Teil auf die Befestigungsplatte zurückgefaltet und an ihr befestigt. Regen- oder Tauwasser wird so zuverlässig über den Dichtungslappen und direkt über die Dachziegel abgeleitet, ohne in die Dachunterkonstruktion und darunter liegende Räume eines Gebäudes eindringen zu können. Weitere Abdichtungen, z.B. zwischen Tragabschnitt und Dachziegel oder außen auf dem Dachziegel, und Klebeverbindungen erübrigen sich. Damit wird die Montage der Befestigungsvorrichtung vereinfacht und wird unempfindlich gegenüber auf Baustellen auftretenden Staub, Schmutz und Nässe.

Bei der bevorzugten einteiligen Ausführungsform des Dichtungslappens kann der auf die Befestigungsplatte zurückgefaltete Abschnitt des Dichtungslappens mit der Befestigungsplatte durch ihre Befestigungslöcher verschraubt sein. Der Dichtungslappen ist so sicher in seiner Lage fixiert, und es können dafür vorteilhaft dieselben Schrauben benutzt werden, mit denen die Befestigungsplatte an der Dachunterkonstruktion befestigt wird. Die Befestigung der Dichtungslappen kann also zeitsparend gleichzeitig mit der Befestigung der Befestigungsplatte an der Dachunterkonstruktion vorgenommen werden.

Nach einer anderen Ausführungsform kann der Dichtungslappen aus zwei Teilen bestehen. Ein erster Dichtungslappen ist so bemessen, dass er an beiden Schmalseiten der Befestigungsplatte unter ihr streifenförmig hervorragt; die sich bildenden Streifen sind auf die Befestigungsplatte umfalzbar und der erste Dichtungslappen ragt auf der der nächst unteren Reihe von Dachziegeln einer Dacheindeckung zugewandten Längsseite der Befestigungsplatte unter dieser Befestigungsplatte hervor und reicht bis über einen Dachziegel der nächst unteren Reihe der Dacheindeckung, so dass dieser zumindest teilweise abgedeckt wird. Auf der anderen Längsseite der Befestigungsplatte ragt der erste Dichtungslappen unter der Befestigungsplatte über sie hinaus und erstreckt sich unter dem Dachziegel der oberen Reihe der Dacheindeckung, mindestens aber soweit, dass er von einem zweiten Dichtungslappen überdeckt wird. Dieser zweite Dichtungslappen wird von oben auf die Befestigungsplatte aufgelegt und bei Bedarf fixiert. Dabei ragt dieser zweite Dichtungslappen sowohl in Längsrichtung über die Befestigungsplatte als auch seitlich streifenförmig über die Befestigungsplatte hinaus, und die seitlichen Streifen werden zusammen mit den Streifen des ersten Dichtungslappens auf die Befestigungsplatte umgefalzt. Der erste Dichtungslappen und die Befestigungsplatte und die Befestigungsschrauben werden hierbei vom zweiten Dichtungslappen überdeckt.

Ein im Bereich der Befestigungsvorrichtung zu liegender Dachziegel kann in der Weise mit einer Aussparung für den hindurchragenden Tragabschnitt versehen werden, dass der oder die Dichtungslappen vom Dachziegel weitgehendst abgedeckt und somit regendicht ist oder sind.

Bevorzugt bestehen der oder die Dichtungslappen aus einem form- und faltbaren, metallischen Material. Ein metallisches Material wird bevorzugt, weil es eine lange Lebensdauer gewährleistet. Es kann dafür vorzugsweise Blei, Aluminium oder Kupfer zur Anwendung kommen.

Der oder die Dichtungslappen können aber auch aus einem geeigneten Kunststoff hergestellt werden, da sie in Folge ihrer Lage durch die Dacheindeckung weitgehendst gegen nachteilige Einwirkungen von außen geschützt sind.

Der Tragabschnitt der erfindungsgemäßen Befestigungsvorrichtung ist bevorzugt als Tragflansch ausgebildet, er ist mit der Befestigungsplatte unmittelbar verbunden und er ragt bei der einen Längskante der rechteckigen Befestigungsplatte mittig und im rechten Winkel von der Befestigungsplatte ab. So ist erreicht, dass kein Teil der Befestigungsvorrichtung auf einem Dachziegel zur Auflage kommen kann, folglich keine äußeren Kräfte von der Befestigungsvorrichtung auf einen Dachziegel übertragen werden, die Schäden an dem Dachziegel verursachen könnten.

In der Befestigungsplatte sind vorzugsweise zwei Reihen von gegeneinander versetzten Befestigungslöchern vorgesehen, die sich alle auf einer Seite des Tragflansches befinden. Dies erlaubt eine schmale, auch materialsparende Ausführung der Befestigungsplatte, und wenn die Befestigungsplatte, wie vorgesehen, quer zum Dachbalken montiert wird, kann die Verschraubung an einer Stelle erfolgen, wo die Schraubenköpfe nicht mit dem darüber liegenden Dachziegel in Berührung kommen können, nicht an ihm reiben können.

Der Tragflansch ist vorteilhaft mit einem vertikal verlaufenden Langloch versehen; an diesem Langloch kann ein Verbindungselement für ein Trägerprofil in der Höhe verstellbar angebracht werden, so dass die Höhe, in der das Trägerprofil zum Dachziegel verlaufen soll, an unterschiedliche Dachziegeltypen und auch an unebene Dächer angepasst werden kann.

Die beschriebene Anordnung des Tragflansches sorgt also für eine direkte, senkrechte oder nahezu senkrechte Weiterleitung der äußeren Krafteinwirkung.

Die der Befestigungsplatte zugewandte Innenseite des Tragflansches kann vorteilhaft eine Zahnung oder Riffelung aufweisen. So kann eine sichere Verbindung des Verbindungselements am Tragflansch erreicht werden, besonders wenn die zu verbindende Fläche des Verbindungselements ebenfalls eine Zahnung oder Riffelung aufweist.

Es ist von Vorteil für die Stabilität der Befestigungsvorrichtung, wenn der Tragflansch von der Längskante der Befestigungsplatte um ein geringes Maß nach innen versetzt ist und mindestens an der einen Hochkante des Tragflansches ein Steg abgewinkelt ist. Der Tragflansch an sich ist dabei vorzugsweise deutlich breiter als der abgewinkelte Steg. So erhält der quer zur Dachneigung stehende Tragflansch ein ausreichend hohes Widerstandsmoment gegen Verbiegung durch äußere Kräfte und bietet gleichzeitig die Möglichkeit einer verbesserten Fixierung eines Befestigungselements für ein Tragprofil.

Der die Stabilität des Tragflansches erhöhende Steg kann auch nur über Teilabschnitte des Tragflansches angeordnet sein.

Der Tragflansch kann auch als Gewindestange ausgebildet sein.

Die Erfindung wird im Folgenden anhand der anhängenden Zeichnung näher beschrieben; es zeigen
- Fig. 1: eine Seitenansicht der erfindungsgemäßen Befestigungsvorrichtung,
- Fig. 2: eine Ansicht der Befestigungsvorrichtung in Richtung des Pfeiles A in Fig. 1,
- Fig. 3: eine Draufsicht auf die Befestigungsvorrichtung gemäß Fig. 1 und Fig. 2,
- Fig. 4: eine Seitenansicht einer auf einer Dachunterkonstruktion befestigten erfindungsgemäßen Befestigungsvorrichtung mit montiertem Trägerprofil,
- Fig. 5: eine Draufsicht auf die Befestigungsvorrichtung gemäß Fig. 1 bis Fig. 3 mit einer erfindungsgemäßen Abdichtung gegen eindringende Feuchtigkeit und Nässe,
- Fig. 6: eine andere Ausführungsform der erfindungsgemäßen Abdichtung an einer Befestigungsvorrichtung gemäß Fig. 1 bis Fig. 3 und
- Fig. 7: eine schematische Draufsicht auf den Teil eines Daches mit einer montierten Befestigungsvorrichtung nach der Erfindung.

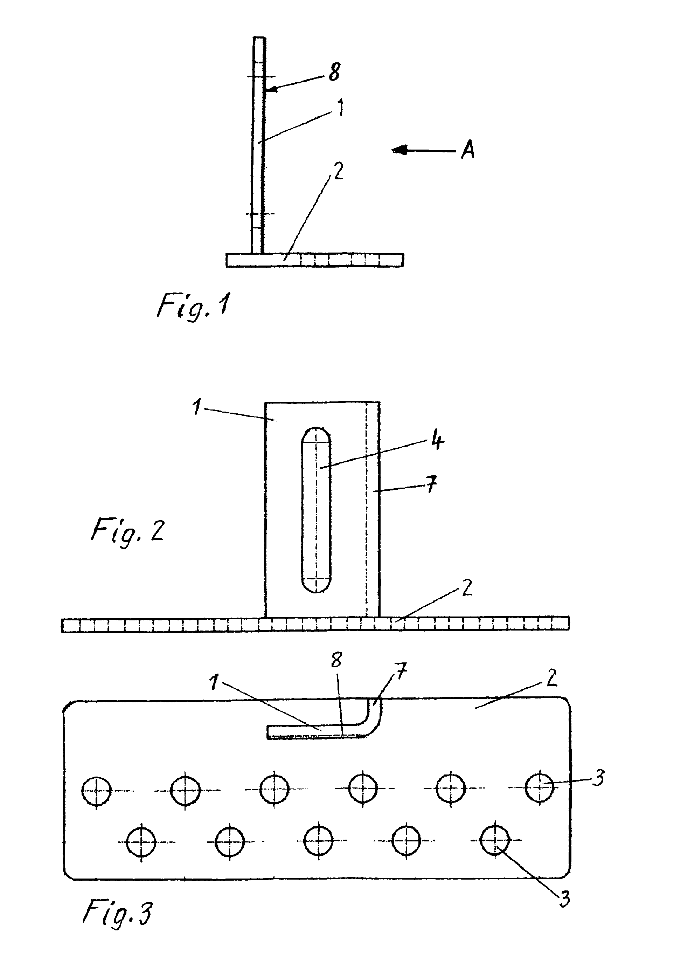

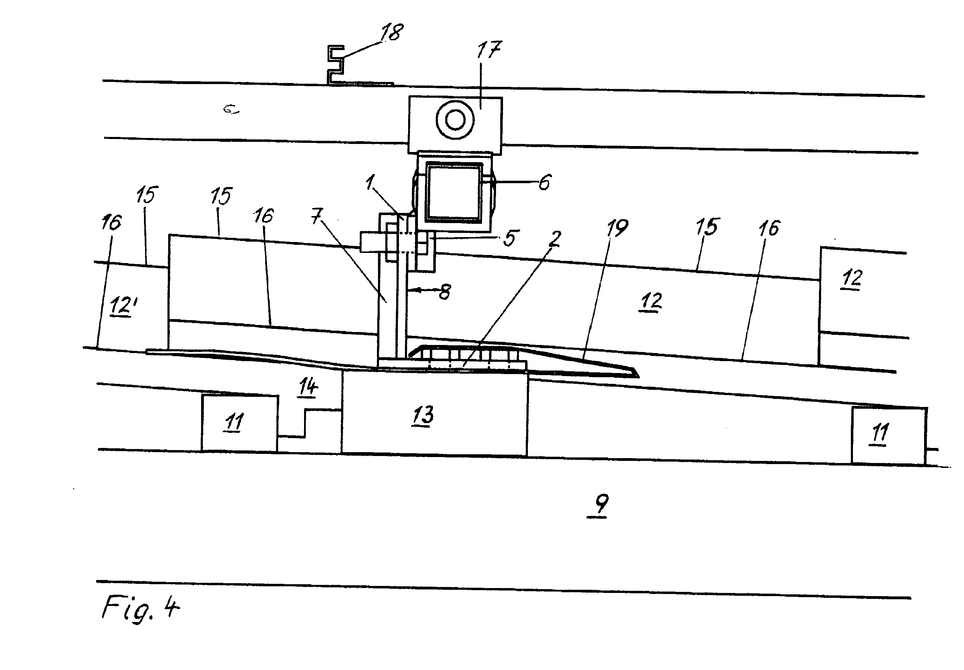

Die erfindungsgemäße Befestigungsvorrichtung, wie sie in Fig. 1 bis Fig. 3 dargestellt ist, besteht aus einer rechteckigen Befestigungsplatte 2, von der im rechten Winkel ein Tragflansch 1 abragt. Der Tragflansch 1 kann mit der Befestigungsplatte 2 verschweißt oder verschraubt sein; Tragflansch 1 und Befestigungsplatte 2 können aber auch einteilig aus einem Winkeleisen oder als Gussteil hergestellt sein. In der Befestigungsplatte 2 sind gemäß Fig. 3 zwei Reihen von Befestigungslöchern 3 vorgesehen, die der Befestigung der Vorrichtung an einer Dachunterkonstruktion, wie einem Dachsparren, dienen. Vorzugsweise sind die Befestigungslöcher 3 der einen Reihe gegenüber der anderen Reihe versetzt; dies dient einer stabilen und in der Position variablen Befestigung an einer Dachunterkonstruktion. Der Tragflansch 1 ragt mittig an der einen Längsseite der rechteckigen Befestigungsplatte 2 ab und ist um ein geringes Maß von der Längskante nach innen versetzt, und er weist ein vertikales Langloch 4 auf, das der Verbindung mit einem weiteren Verbindungselement 5 zur Befestigung eines beliebig orientierten Trägerprofils 6 (siehe Fig. 4) dient. Die Befestigungslöcher 3 befinden sich in der Befestigungsplatte 2 alle auf einer Seite des Tragflansches 1. Der Tragflansch 1 ist mindestens entlang seiner einen Hochkante rechtwinklig abgebogen; durch den abgewinkelten Steg 7 wird die Stabilität der Befestigungsvorrichtung verbessert. Die in Richtung der Befestigungsplatte 2 nach innen weisende Fläche des Tragflansches 1 weist eine Zahnung 8 oder Riffelung 8 auf, durch die die Verbindung mit dem Verbindungselement 5 (siehe Fig. 4) verbessert und sicher gemacht wird.

Fig. 4 zeigt eine Seitenansicht einer auf einer Dachunterkonstruktion befestigten Befestigungsvorrichtung nach der Erfindung mit montierten, sich kreuzenden Trägerprofilen 6, 6' für Solarmodule oder ähnliche Komponenten. Auf einem Dachbalken 9 sind zu diesem Zweck quer verlaufende Dachlatten 11 befestigt. An diesen Dachlatten 11 sind Reihen von Dachziegeln 12, 12' angeordnet. Der Dachhaken bzw. die Befestigungsvorrichtung soll mit dem Dachbalken 9 der Dachunterkonstruktion verbunden werden. Sein Tragflansch 1 soll nach der Montage durch einen Dachziegel 12 hindurch und über ihn hinaus ragen. Es kommen allgemein nach Form und Höhe unterschiedliche Typen von Dachziegeln zur Anwendung. Deshalb kann ein Dachhaken nur in Ausnahmefällen direkt mit einem Dachbalken verbunden werden. Es werden deshalb Holz- oder auch Metallblöcke 13, die in unterschiedlicher Höhe zur Verfügung stehen, auf den Dachbalken 9 aufgesetzt.

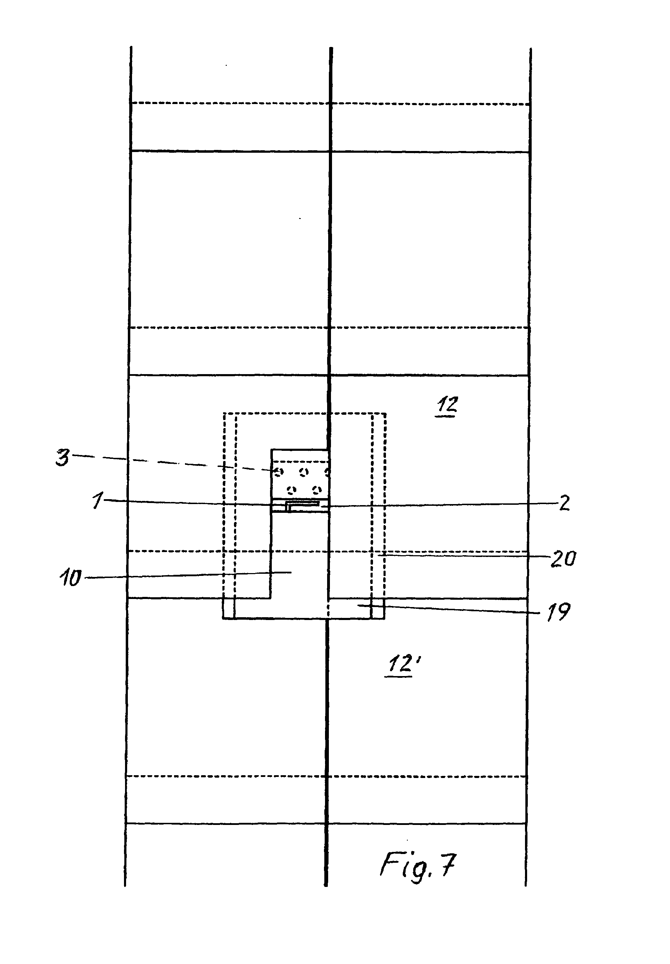

Die Holz- oder Metallblöcke 13 werden in der Regel oberhalb einer Dachlatte 11 bzw. oberhalb der Einhängenase 14 eines Dachziegels 12' positioniert. Zwischen einer Dachlatte 11 und den Blöcken 13 ist ein Abstand zu lassen für die Einhängenasen 14 der Dachziegel 12', dabei kann die Einhängenase 14 auch als Anschlag 14 für die Blöcke 13 dienen. Mit einem solchen Holzblock 13 kann der Dachhaken über seine Befestigungsplatte 2 durch Schrauben verbunden werden. Ein Dachziegel 12 wurde mit einer Aussparung 10 versehen (siehe auch Fig. 7), durch den der Tragflansch 1 des Dachhakens hindurchragen kann. Dachziegel haben eine ebene Unterseite, mit der sie auf der Dachunterkonstruktion aufgelegt werden. Um Regenwasser in geeigneter Weise abzuführen, ist ihre Oberfläche allgemein in irgendeiner Weise gewellt, so dass ein Ziegelberg 15 und ein Ziegeltal 16 entstehen. Die Aussparung 10 für den Tragflansch 1 des Dachhakens wird vorteilhaft im Bereich eines Ziegeltals 16 hergestellt. Der Dachhaken wird am Holzblock 13 oder, wo es möglich ist, direkt an einem Dachbalken 9 in der Weise befestigt, dass sich die Längsachse seiner Befestigungsplatte 2 quer zur Dachneigung bzw. quer zum Dachbalken 9 erstreckt und seine Längsseite, an der der Tragflansch 1 angeordnet ist, dem Dachziegel 12' der nächst unteren Reihe der Dacheindeckung zugewandt ist. Wenn die Befestigung des Dachhakens am Holzblock 13 oder einem Dachbalken 9 mittels seiner Befestigungsplatte 2 hergestellt ist, kann der mit der Aussparung 10 versehene Dachziegel 12 aufgelegt werden. Der Tragflansch 1 ragt am Ziegeltal 16 bis über den Ziegelberg 15 hinaus. Mit der geriffelten oder gezahnten Innenseite 8 (siehe Fig. 1) des Tragflansches 1 ist ein der Verbindung mit einem Trägerprofil 6 dienendes Verbindungselement 5 durch das Langloch 4 mittels Schraube und Mutter verbunden; das Verbindungselement 5 weist vorteilhaft ebenfalls eine mit einer Riffelung oder einer Zahnung versehene Fläche auf, mit der es an der Innenseite des Tragflansches 1 zur Anlage gebracht wird, so dass die Verbindung sicher ist. Zum am Dach quer verlaufenden Trägerprofil 6 wird über ein Verbindungsglied 17, im rechten Winkel kreuzend, ein weiteres Trägerprofil 6' montiert, an dem Halteklammern 18 für ein Solarmodul oder ähnliche Komponenten befestigt werden können.

Diese Befestigungsvorrichtung bzw. dieser Dachhaken kommt in keiner Weise in direkte Berührung mit einem Dachziegel 12, es werden also durch sie keine von außen wirkende Kräfte auf einen Dachziegel 12 übertragen und somit Schäden an den Dachziegeln sicher vermieden. Es kann deshalb von einer langen und weitgehend wartungsfreien Lebensdauer der Vorrichtung ausgegangen werden.

Die erfindungsgemäße Form des Dachhakens bietet noch weitere Vorteile. Die mit zwei Reihen von Befestigungslöchern 3 versehene Befestigungsplatte 2 wird, wie oben erwähnt, mit ihrer Längsachse quer zur Dachneigung und quer zum Dachbalken 9 angeordnet. Damit wird eine Flexibilität bei der Positionierung des Dachhakens erreicht, die eine Anpassung an unterschiedliche Dachziegeltypen und an die an einem Dachziegel 12 erforderliche Aussparung 10 für den Dachhaken erlaubt. Die Befestigungsplatte 2 kann quer zum Dachbalken 9 verschoben und in verschiedenen Positionen befestigt werden, so dass sich der Tragflansch 1 des Dachhakens im Idealfall über dem Dachbalken 9 aber auch in unterschiedlichem Abstand rechts oder links vom Dachbalken 9 befinden kann. Auf besondere, zwei oder mehr Dachbalken verbindende Grundträger kann so verzichtet werden. Diese Variabilität bei der Positionierung des Tragflansches 1 erlaubt die Verwendung von Dachziegeln 12, an denen trotz unterschiedlichen Dachziegeltyps die für den Tragflansch 1 erforderliche Aussparung vorgefertigt ist und nicht erst vom Dachdecker bei seiner Arbeit am Dach vorgenommen werden muss. Es wird also die Position des Dachhakens, und das bedeutet die Position des Tragflansches 1, an den Dachziegel 12 bzw. die in ihm bereits vorgesehene Aussparung 10 und nicht, wie bisher, der Dachziegel bzw. dessen Aussparung an eine nicht variierbare Position des Dachhakens angepasst.

Dass der Tragflansch 1 nahe der einen Längskante der Befestigungsplatte 2 und dort mittig angeordnet ist, sich die Befestigungslöcher 3 alle einseitig und in Richtung der Dachneigung oberhalb des Tragflansches 1 befinden und der Tragflansch 1 sich nach der Montage, wie die Befestigungsplatte 2 auch, quer zum Dachbalken 9 erstreckt, erlaubt eine platz- und materialsparende Herstellung des Dachhakens. Die Befestigungsplatte 2 kann insgesamt schmaler ausgebildet werden, bzw. sie kann eine in Längsrichtung des Dachbalkens 9 oder der Dachneigung kurze Bauform erhalten. Hierdurch wird eine problemlose, zur nächst unteren Reihe der Dachziegel 12' nahe liegende Positionierung bzw. Verschraubung des Dachhakens ermöglicht. Die Verschraubung des Dachhakens mit einem Dachbalken 9 erfolgt damit wegen der vorgegebenen Neigung von Dachziegeln zwangsläufig an einer Stelle, wo die Schraubenköpfe nicht mit dem darüber anzuordnenden Dachziegel 12 in Berührung kommen können, nicht am Ziegel reiben können. Indem der Tragflansch 1 sich quer bzw. im rechten Winkel zum Dachbalken 9 erstreckt und er durch einen Steg 7 verstärkt ist, erhält er ein ausreichend hohes Widerstandsmoment gegen Verbiegen durch äußere Kräfte und bietet gleichzeitig die Möglichkeit einer verbesserten Fixierung eines Befestigungselements für ein Tragprofil.

Es ist von entscheidendem Vorteil, wenn im Bereich der Befestigungsvorrichtung bzw. des Dachhakens und der Aussparung 10 am Dachziegel 12 Maßnahmen zur Abdichtung gegen eindringende Feuchtigkeit und Nässe vorgenommen werden. Eine solche Abdichtung soll dauerhaft und möglichst über die gesamte anzunehmende Lebensdauer einer Solaranlage und der Befestigungsvorrichtung einwandfrei wirksam sein. Dabei sind von außen einwirkende Kräfte und Temperaturschwankungen, denen die gesamte Anlage ausgesetzt ist, zu berücksichtigen.

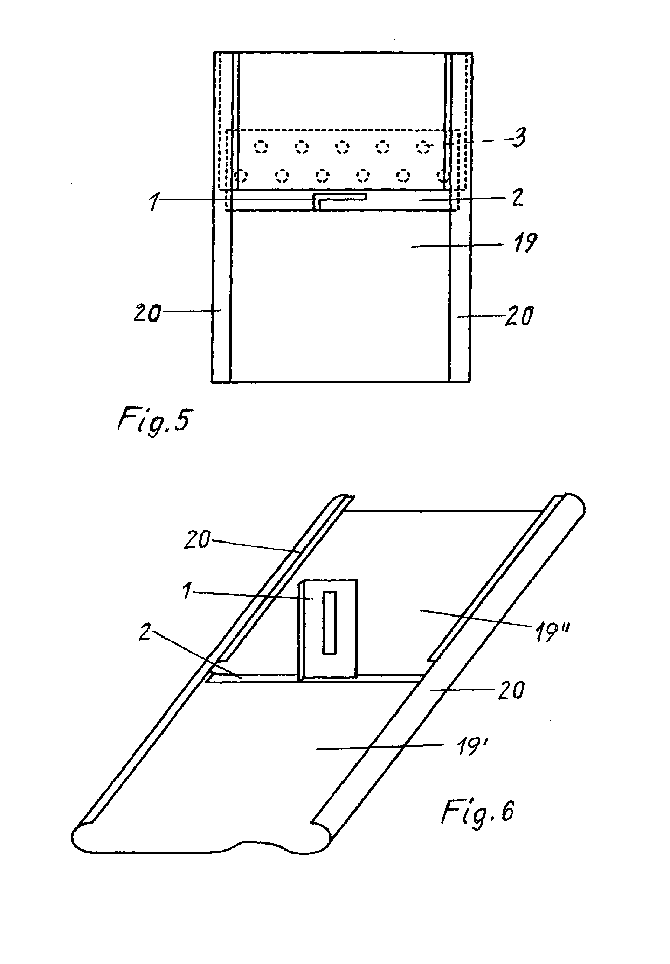

Nach der Erfindung wird eine solche Abdichtung, wie in Fig. 4 dargestellt, erreicht, indem die Befestigungsplatte 2 des Dachhakens mit einem Dichtungslappen 19 unterlegt wird, der einerseits gegen Nässe abdichtende Eigenschaften hat, andererseits dauerhaft formbar oder faltbar ist und deshalb nach der Erfindung vorzugsweise aus Blei, Aluminium oder Kupfer besteht. Metallisches Material wird bevorzugt, denn es gewährleistet eine lange Lebensdauer. Da sich der Dichtungslappen 19 nach der Erfindung unterhalb der Befestigungsplatte 2 und damit unterhalb der Dacheindeckung befindet, sind aber auch andere geeignete Materialien, z.B. bestimmte Kunststoffe, einsetzbar, denn der Dichtungslappen 19 ist so nicht besonderen äußeren Belastungen, wie Wind und Wetter, ausgesetzt, wie z.B. Dichtungen aus Gummi oder Kunststoff, die außen auf dem Dachziegel angebracht werden. Wie deutlicher aus Fig. 5 zu ersehen ist, ragt der Dichtungslappen 19 in seiner Breite zunächst beidseitig unter der Befestigungsplatte 2 hervor, so dass auf beiden Seiten ein Streifen 20 des Dichtungslappens 19 auf die Befestigungsplatte 2 umgefalzt werden kann. Die Länge des Dichtungslappens 19 ist so bemessen, dass er auf der Seite des Tragflansches 1 an der Befestigungsplatte 2 bis über den Dachziegel 12' der nächst unteren Reihe der Dacheindeckung reicht und diesen zum Teil abdeckt (siehe dazu auch Fig. 7); auf der entgegengesetzten Seite, also aufwärts in Richtung Dachneigung, ragt er unter der Befestigungsplatte 2 über diese zunächst soweit hinaus, dass er auf die Befestigungsplatte 2 bis zum Tragflansch 1 zurückgeschlagen werden kann und mit Schrauben durch die Befestigungslöcher 3 der Befestigungsplatte 2 fixiert werden kann. Eindringendes Regenwasser oder Tauwasser läuft über den auf die Befestigungsplatte 2 zurückgeschlagenen Abschnitt des Dichtungslappens 19 und über den auf den Dachziegel 12' der nächst unteren Reihe der Dacheindeckung ragenden Abschnitt des Dichtungslappens 19 ab. Die seitlich umgefalzten Streifen 20 des Dichtungslappens 19 lenken Wasser in Traufrichtung ab. Es kann so keine Feuchtigkeit oder Nässe im Bereich des Dachhakens in den Dachstuhl und darunter liegende Räume eindringen. Wasser, das durch die Aussparung 10 im Dachziegel 12 bis auf die Befestigungsplatte 2 durchdringt, wird durch den der Befestigungsplatte 2 unterlegten Dichtungstappen 19 zuverlässig abgeleitet. Eine zusätzliche Abdichtung, etwa am Tragflansch 1 oder außen auf dem Dachziegel 12 ist nicht erforderlich. Der über dem Dachhaken angeordnete Dachziegel 12 ist im Bereich des Tragflansches 1 im notwendigen Umfang mit einer Aussparung 10 versehen, so dass der ausgesparte Dachziegel 12 den Dichtungslappen 19 in ausreichendem Umfang abdeckt. Wie bereits erwähnt, kann auf Grund der besonderen Form des Dachhakens und seiner Variabilität bei der Positionierung die Aussparung 10 am Dachziegel vorgefertigt und verhältnismäßig klein sein, sie muss nicht bei der Arbeit am Dach ausgeschnitten werden. Dies erleichtert und vereinfacht die Arbeit des Dachdeckers und vermeidet Staub und Schmutz am Arbeitsplatz mit allen nachteiligen Folgen.

Der Dichtungslappen 19 kann, wie oben beschrieben, einteilig ausgebildet sein und in seinem oberen Bereich auf die Befestigungsplatte 2 des Dachhakens zurückgefaltet sein. Er kann, wie in Fig. 6 dargestellt, auch zweiteilig ausgebildet werden. Die Befestigungsplatte 2 des Dachhakens kann mit einem ersten Dichtungslappen 19' unterlegt sein, der wiederum in seiner Breite zunächst beidseitig unter der Befestigungsplatte 2 soweit hervorragt, dass auf beiden Seiten ein Streifen 20 des Dichtungslappens 19 auf die Befestigungsplatte 2 umgefalzt werden kann. Seine Länge ist so bemessen, dass er auf der Seite des Tragflansches 1 an der Befestigungsplatte 2 bis über den Dachziegel 12' der nächst unteren Reihe der Dacheindeckung reicht und diesen zum Teil abdeckt (siehe dazu auch Fig. 7); auch auf der entgegengesetzten Seite ragt er unter der Befestigungsplatte 2 über diese hinaus und erstreckt sich unter dem Dachziegel 12 der oberen Reihe der Dacheindeckung, mindestens aber soweit, dass er von einem zweiten Dichtungslappen 19" überdeckt wird. Der zweite Dichtungslappen 19", der kürzer als der erste Dichtungslappen 19' sein kann, aber die gleiche Breite aufweist, wird dann von oben auf die Befestigungsplatte 2 gelegt und kann bei Bedarf fixiert werden. Der beidseitig an der Befestigungsplatte 2 überstehende Streifen 20 beider Dichtungslappen 19', 19" wird umgefalzt, damit Regen- oder Tauwasser, wie beschrieben, abgeleitet werden kann.

### Bezugszeichenliste:

- 1: Tragflansch
- 2: Befestigungsplatte
- 3: Befestigungslöcher
- 4: Langloch
- 5: Verbindungselement
- 6, 6': Trägerprofil
- 7: Steg
- 8: Zahnung, Riffelung
- 9: Dachbalken
- 10: Aussparung
- 11: Dachlatten
- 12,12': Dachziegel
- 13: Holzblock
- 14: Einhängenase, Anschlag
- 15: Ziegelberg
- 16: Ziegeltal
- 17: Verbindungsglied
- 18: Halteklammer
- 19, 19', 19": Dichtungslappen
- 20: Streifen

## Patentansprüche

1. Befestigungsvorrichtung für die Befestigung eines Trägerprofils an einer Dachunterkonstruktion mit einer mit Befestigungslöchern versehenen und die Form eines Rechtecks aufweisenden Befestigungsplatte und mit einem mit der Befestigungsplatte unmittelbar verbundenen Tragabschnitt, an dem ein Verbindungselement für ein Trägerprofil angebracht ist und der etwa senkrecht von der Befestigungsplatte abragt, wobei die Befestigungsplatte mit Hilfe der Befestigungslöcher mit der Dachunterkonstruktion verbindbar ist, **dadurch gekennzeichnet, dass** die Befestigungsplatte (2) mit ihrer Längsachse quer zur Dachneigung mit der Dachunterkonstruktion verbunden ist und zur Abdichtung gegen eindringende Feuchtigkeit und Nässe mit einem Dichtungslappen (19) unterlegt ist, der allseits unter der Befestigungsplatte (2) hervorragt.

2. Befestigungsvorrichtung nach Anspruch 1, dadurch gekennezichnet, dass die Breite des Dichtungslappens (19) so bemessen ist, dass er an beiden Schmalseiten der Befestigungsplatte (2) unter ihr streifenförmig hervorragt und die Streifen (20) beidseitig in Richtung Befestigungsplatte (2) umgefalzt sind.

3. Befestigungsvorrichtung nach Anspruch 1, **dadurch gekennzeichnet, dass** die Länge des Dichtungslappens (19) so bemessen ist, dass er auf der der nächst unteren Reihe von Dachziegeln 12' einer Dacheindeckung zugewandten Längsseite der Befestigungsplatte (2) unter dieser Befestigungsplatte (2) hervorragt und bis über einen Dachziegel (12') der nächst unteren Reihe der Dacheindeckung ragt, diesen so zumindest teilweise abdeckt und dass ein auf der anderen Längsseite der Befestigungsplatte (2) unter ihr hervorragender Abschnitt zum Teil auf die Befestigungsplatte (2) zurückgefaltet ist und an ihr befestigt ist.

4. Befestigungsvorrichtung nach Anspruch 3, **dadurch gekennzeichnet, dass** der auf die Befestigungsplatte (2) zurückgefaltete Abschnitt des Dichtungslappens (19) mit der Befestigungsplatte (2) durch ihre Befestigungslöcher (3) verschraubt ist.

5. Befestigungsvorrichtung nach Anspruch 1, **dadurch gekennzeichnet, dass** der Dichtungslappen aus zwei Teilen besteht und ein erster Dichtungslappen (19') so bemessen ist, dass er an beiden Schmalseiten der Befestigungsplatte (2) unter ihr streifenförmig hervorragt und die Streifen (20) auf die Befestigungsplatte (2) umfalzbar sind und dass er auf der der nächst unteren Reihe von Dachziegeln (12') einer Dacheindeckung zugewandten Längsseite der Befestigungsplatte (2) unter dieser Befestigungsplatte (2) hervorragt und bis über einen Dachziegel (12') der nächst unteren Reihe der Dacheindeckung ragt, diesen so zumindest teilweise abdeckt und dass er auf der anderen Längsseite der Befestigungsplatte (2) unter der Befestigungsplatte (2) über sie hinausragt und sich unter dem Dachziegel (12) der oberen Reihe der Dacheindeckung erstreckt, und zwar mindestens soweit, dass er von einem zweiten Dichtungslappen (19") überdeckt wird, wobei der zweite Dichtungslappen (19") von oben auf die Befestigungsplatte (2) aufgelegt ist und wobei dieser zweite Dichtungslappen (19") sowohl in Längsrichtung über die Befestigungsplatte (2) hinausragt als auch seitlich streifenförmig über die Befestigungsplatte (2) hinausragt und die Streifen (20) auf die Befestigungsplatte (2) zusammen mit den streifen (20) des ersten Dichtungslappens (19') umfalzbar sind.

6. Befestigungsvorrichtung nach Anspruch 3 oder 5, **dadurch gekennzeichnet, dass** ein im Bereich der Befestigungsvorrichtung zu liegender Dachziegel (12) in der Weise mit einer Aussparung (10) für den hindurchragenden Tragabschnitt (1) versehen ist, dass der oder die Dichtungslappen (19, 19', 19") vom Dachziegel (12) weitgehendst abgedeckt und somit regendicht ist oder sind.

7. Befestigungsvorrichtung nach Anspruch 1 oder 5, **dadurch gekennzeichnet, dass** der oder die Dichtungslappen (19, 19', 19") aus einem form- und faltbaren, metallischen Material besteht.

8. Befestigungsvorrichtung nach Anspruch 7, **dadurch gekennzeichnet, dass** der oder die Dichtungslappen (19, 19', 19") aus Blei, Aluminium oder Kupfer besteht.

9. Befestigungsvorrichtung nach Anspruch 1 oder 5, **dadurch gekennzeichnet, dass** der oder die Dichtungslappen (19, 19', 19") aus einem Kunststoff besteht.

10. Befestigungsvorrichtung nach Anspruch 1, **dadurch gekennzeichnet, dass** der Tragabschnitt als Tragflansch (1) ausgebildet ist, dass der Tragflansch (1) mit der Befestigungsplatte (2) direkt verbunden ist und bei der einen Längskante der rechteckigen Befestigungsplatte (2) mittig und im rechten Winkel von der Befestigungsplatte (2) abragt.

11. Befestigungsvorrichtung nach Anspruch 10, **dadurch gekennzeichnet, dass** in der Befestigungsplatte (2) zwei Reihen von gegeneinander versetzten Befestigungslöchern (3) vorgesehen sind und diese Befestigungslöcher (3) sich alle auf einer Seite des Tragflansches befinden.

12. Befestigungsvorrichtung nach Anspruch 10, **dadurch gekennzeichnet, dass** der Tragflansch (1) mit einem vertikalen verlaufenden Langloch (4) versehen ist.

13. Befestigungsvorrichtung nach Anspruch 10, **dadurch gekennzeichnet, dass** die der Befestigungsplatte (2) zugewandte Innenseite des Tragflansches (1) eine Zahnung (8) oder Riffelung (8) aufweist.

14. Befestigungsvorrichtung nach Anspruch 10, **dadurch gekennzeichnet, dass** der Tragflansch (1) von der Längskante der Befestigungsplatte (2) um ein geringes Maß nach innen versetzt ist.

15. Befestigungsvorrichtung nach Anspruch 10, **dadurch gekennzeichnet, dass** an zumindest der einen Hochkante des Tragflansches (1) ein Steg (7) abgewinkelt ist.

16. Befestigungsvorrichtung nach Anspruch 15, **dadurch gekennzeichnet, dass** der Tragflansch (1) an sich breiter ist als der abgewinkelte Steg (7) und die breite Seite des Tragflansches (1) parallel zur Längskante der Befestigungsplatte (2) und der kürzere Steg (7) parallel zum Dachbalken (9) verlaufen.

17. Befestigungsvorrichtung nach Anspruch 15, **dadurch gekennzeichnet, dass** ein Steg (7) nur über Teilabschnitte des Tragflansches (1) angeordnet ist.

18. Befestigungsvorrichtung nach Anspruch 10, **dadurch gekennzeichnet, dass** der Tragabschnitt als Gewindeflansch ausgebildet ist.
